# EUROPEAN PATENT APPLICATION

(11) **EP 4 647 302 A2**
(43) Date of publication of application: **12.11.2025**
(21) Application number: 25203847.6
(22) Date of filing: 04.03.2022
(51) Int. Cl.: B60R 1/12

(54) **EXTERIOR REARVIEW MIRROR ASSEMBLY FOR VEHICLES**

(62) Divisional of application: 22382205.7
(71) Applicant: Ficosa Automotive, S.L.U., 08232 Viladecavalls (ES)
(72) Inventor: LÓPEZ GALERA, Robert, 08830 El Prat de Llobregat (Barcelona) (ES); BRAVO CORROCHANO, David, 08028 Barcelona (ES)
(74) Representative: Hoffmann Eitle

(57) **Abstract**

The invention refers to an exterior rearview mirror assembly for vehicles, the assembly comprising: a fixed part configured to be attached to an exterior part of a vehicle, a movable part mounted at the fixed part and rotatable relative to the fixed part about a first axis X1, and a mirror head comprising a mirror housing and a mirror reflective surface. The mirror head is mounted at the movable part, such that the mirror head and the movable part are jointly rotatable about the first axis X1. The mirror head can tilt or rotate relative to the movable part about a second axis X2 to adjust a rear field of view when the assembly is operatively attached to a vehicle, wherein the first and second axis X1, X2 are orthogonal to each other, or they are arranged relative to each other to define an angle within the range 70° to 110°.

## Description

### Field and object of the invention

The present invention relates generally to the field of exterior rear-view mirror assemblies for vehicles, operable to adjust a rearward field of view of the driver of the vehicle.

An object of the invention is to provide an aerodynamically efficient exterior rear-view mirror assembly, that additionally allows a great freedom of design of its components.

An additional object of the invention is to provide an exterior rear-view mirror assembly that can be manufactured with components of reduced size, such as the mirror head and the foot part, in order to reduce manufacturing cost.

### Background of the invention

External rear-view mirror assemblies for motor vehicles, typically include a mirror base or foot adapted for its attachment to a motor vehicle, and a mirror head arranged on the mirror foot as well as a mirror glass accommodated in the mirror head and arranged rigidly thereto. At least one articulation is provided between the mirror head and the arrangement of the mirror foot on the motor vehicle.

Typically, an exterior rear-view mirror assembly includes a mirror actuator operable to adjust a mirror reflective element relative to the mirror casing, so as to adjust a rearward field of view of the driver of the vehicle. Foldable exterior mirror assemblies, include an actuator that pivots or folds the mirror casing relative to the side of the vehicle.

### Summary of the invention

The invention refers to an exterior rear-view mirror assembly for vehicles, wherein the assembly comprises: a fixed part configured to be attached to an exterior part of a vehicle, a movable part mounted at the fixed part and rotatable relative to the fixed part about a first axis X1, and a mirror head comprising a mirror housing and a mirror pane.

The mirror pane has a first surface, a second surface and a perimetric edge. The perimetric edge of the mirror pane may be overlapped totally or partially by the mirror housing, or even, not overlapped by the mirror housing. Further, the mirror housing could overlap, be flush or not with the first surface of the mirror pane, wherein the first surface is the surface closer to the driver when the assembly is operatively attached to the vehicle.

The mirror head is mounted at the movable part, such that the mirror head and the movable part are jointly rotatable about the first axis X1.

The assembly is configured such that when the assembly is operatively attached to the vehicle, the movable part can rotate about the first axis X1 between an extended position, or driving position, in which the mirror head can be positioned to provide a rear field of view for a driver while driving a vehicle, and a parking position in which the mirror head is folded towards the vehicle.

Additionally, the mirror head can tilt or rotate relative to the movable part about a tilting point or second axis X2, to adjust the rear field of view for a driver when the assembly is operatively attached to the vehicle.

Furthermore, the mirror head may be further adapted to tilt or rotate relative to the movable part about a third axis X3.

In a preferred embodiment, first and second axis (X1,X2) are orthogonal to each other, or they are arranged relative to each other to define an angle within the range of 70° to 110°.

In addition, first and third axis (X1,X3) may be parallel to each other, or they are arranged relative to each other to define an angle within the range of 340° to 20°.

The assembly is configured such that a gap is formed in between the movable part and the mirror head to allow the tilting or rotational movement of the mirror head. Preferably, the gap is formed between a curved surface of the movable part and a curved surface of the mirror housing.

The mirror head may have a lower extension, and a portion of the movable part may be placed behind the lower extension, from the point of view of a driver while driving the vehicle forward, and when the assembly is operatively attached to the vehicle. Due to this configuration, the height of the assembly is reduced, as well as the size of its components.

In a preferred embodiment, part of the mirror head is placed above the movable part, and another part of the mirror head is placed in front of the movable part from the point of view of a driver while driving the vehicle forward, and when the assembly is operatively attached to the vehicle. Preferably, at least 50%, or at least 75%, or 100% of the upper surface of the movable part is overlapped by the mirror head. In addition, preferably at least 50%, or 75%, or 100% of the front surface (from the point of view of the driver while driving the vehicle) of the movable part is overlapped or covered by the mirror head.

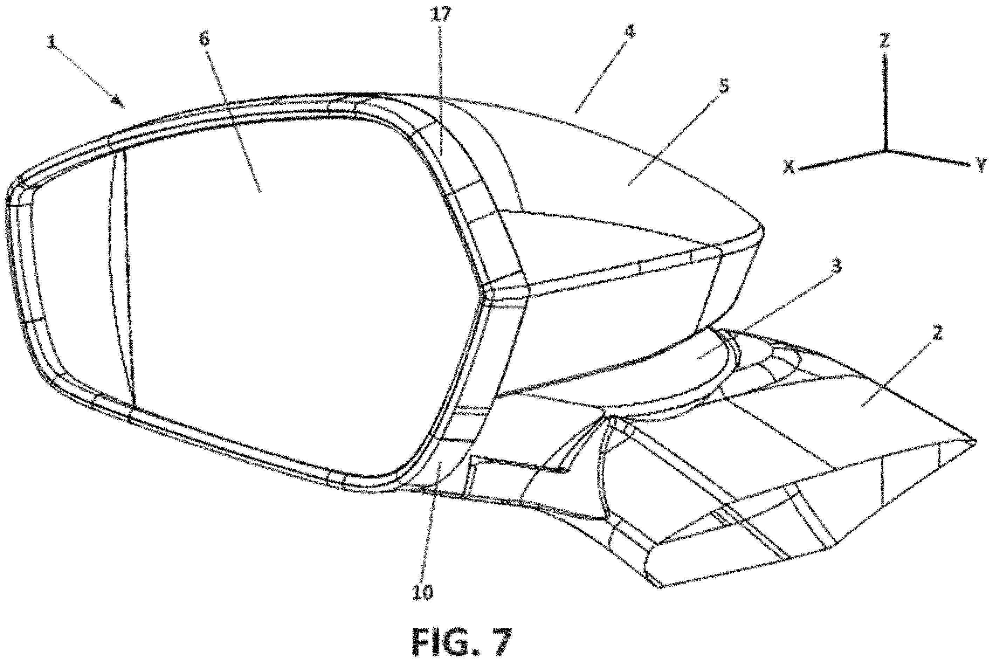

The above-described cases of overlapping areas between the movable part and the mirror head, include embodiments in which the upper surface or the front surface of the movable part is overlapped by the mirror head from on end to the other end in a direction parallel to the longitudinal direction of the vehicle (axis X in Figure 7), but the upper surface or the front surface of the movable part is not overlapped wholly by the mirror head from one end to the other end in a transversal direction to the longitudinal direction of the vehicle (axis Y in Figure 7).

The assembly comprises a first actuator encased (at least in part) inside the movable part and adapted to impart a rotation movement to the movable part about the first axis X1, and a second actuator enclosed inside the mirror head and adapted to impart a titling or rotational movement to the mirror head about at least the second axis X2 or tilting point. The first and second actuators are independently operable, and conventionally consist of electric motors. Preferably, the second actuator, or a third actuator operating independently of the first and second actuators, may impart a tilting or rotational movement to the mirror head about a third axis X3.

When the mirror housing and the mirror pane are attached to each other, they move in tandem (they are jointly movable), that is, there is no relative movement between them when the first or the second actuator are operating.

Additionally, the assembly comprises a bracket having a first part enclosed inside the movable part and coupled with a movable component of the first actuator, and a second part enclosed inside the mirror head and coupled with a fixed component of the second actuator, such that the mirror head is mounted at the movable part by means of the bracket.

The bracket may consist in an independent component attached to a movable component of the first actuator and attached to a fixed component of the second actuator. Alternatively, the bracket is integrally formed with the movable component of the first actuator or integrally formed with the fixed component of the second actuator, or integrally formed with both, the movable component of the first actuator and the fixed component of the second actuator.

An intermediate part of the bracket between first and second parts of the same, runs across, preferably transversally, the gap formed between the movable part and the mirror head.

At least one electric and/electronic component is fitted to the movable part and/or fitted to the mirror head. This electric and/electronic component is preferably one of the following list: a camera, a lighting device, an antenna, a wireless communication system.

In a preferred embodiment, the assembly includes two cameras fitted to the movable part, and preferably also a lighting device fitted to the movable part or to the mirror head. Since the cameras are placed in the movable part, which only moves between the parking and driving positions, the field of view of the cameras in the driving position, is not affected by the adjustment of the mirror pane when the mirror pane moves in tandem with the mirror head.

Preferably, another electric and/electronic component is attached to the bracket. This electric and/electronic component is preferably one of the following list: a camera, a lighting device, an antenna, a wireless communication system.

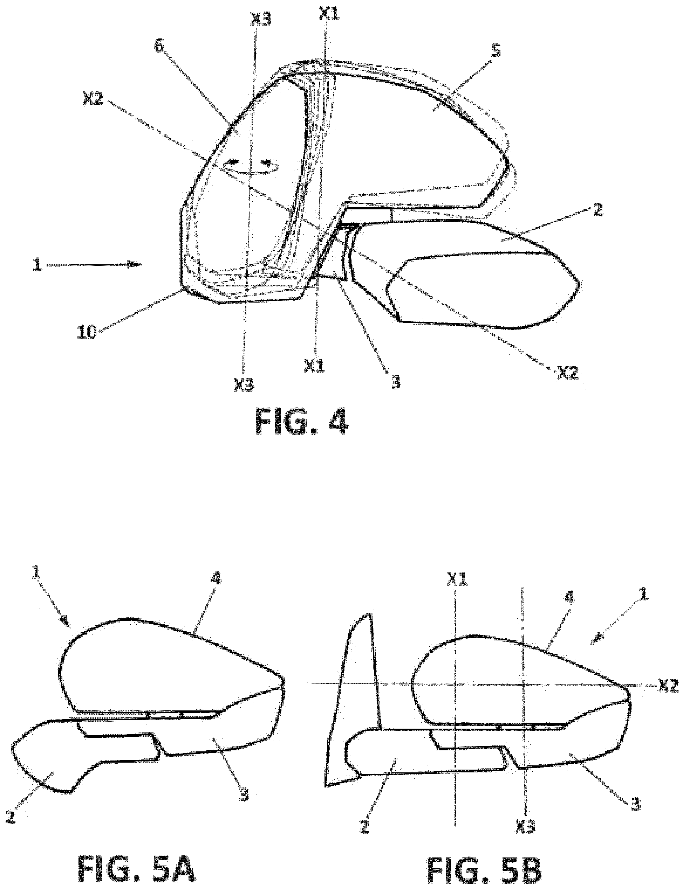

Some advantages of the invention are listed below:
- symmetrical mirrors. For aesthetic and aerodynamic reasons, as the viewing angle between the driver's side mirror and the driver himself and the viewing angle between the passenger's side mirror and the driver are very different, the design of the mirror head is usually modified between the two. In the present invention, because the adjustment of the mirror head is independent of the movable part, the symmetry between the two mirror heads can be maintained, thus, improving the aesthetic and aerodynamic appearance.
- the size of the mirror head can be reduced, because the actuator for the folding operation is placed outside the mirror head, at least partially in the movable part
- lower coefficient of friction due to the following reasons: a mirror head of reduced size according to previous point, due to the provision of a gap between the movable part and mirror head, when the mirror housing and mirror pane moves in tandem when the second actuator operates as regulator of the mirror pane, and due to the lower extension of the mirror head.
- air inlet and outlet between the mirror head and the movable part, making the design more efficient. The gap and air guides therein can be used for improving the aerodynamic design.
- reduction of molds per project. Energy efficiency, due to the mirror housing of reduced size implies reduced size elements and reduced molds.
- the concept of a rear-view mirror can be either a flag or a triangle, that could be the attachment way to the vehicle (as shown in fig 5A, y 5B).
- the movable part can be fitted with extra devices (camera, blinker, ...) are positions in a static part. Essential for these extra devices be in static part. Since these components only move from the parking position to drive position and vice versa, these components can be configured to work in the driving position, such that the mirror adjustment which is independent, would not affect those components.

### Brief description of the drawings

Preferred embodiments of the invention are henceforth described with reference to the accompanying drawings, wherein:
Figure 1.- shows a front elevational view of a preferred embodiment according to the invention.
Figure 2.- shows two cross-sectional views taken on plane A-A in Figure 1, of a side view of the rear-view mirror assembly. Figure 2A is a schematic representation, and Figure 2B is a more detailed one.
Figure 3.- shows two sides views, Figures 3A, 3B, of a mirror assembly according to the invention, including axis of rotation, and the tilting or rotating movement of the mirror head is indicated in Figure 3B by broken lines.
Figure 4.- shows a perspective view of the assembly, wherein the tilting or rotating movement of the mirror head is indicated by broken lines.
Figure 5.- shows in Figures 5A and 5B two front elevational views of two alternative designs of the fixed part of a rear-view assembly.

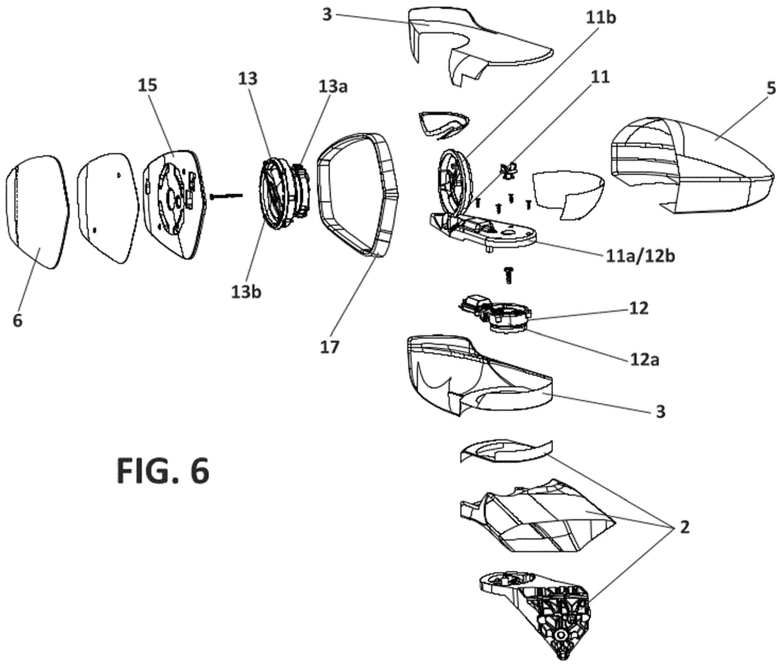

Figure 6.- shows an exploded view of a rear-view assembly according to the invention.
Figure 7.- shows a perspective view of the assembly of Figure 6.

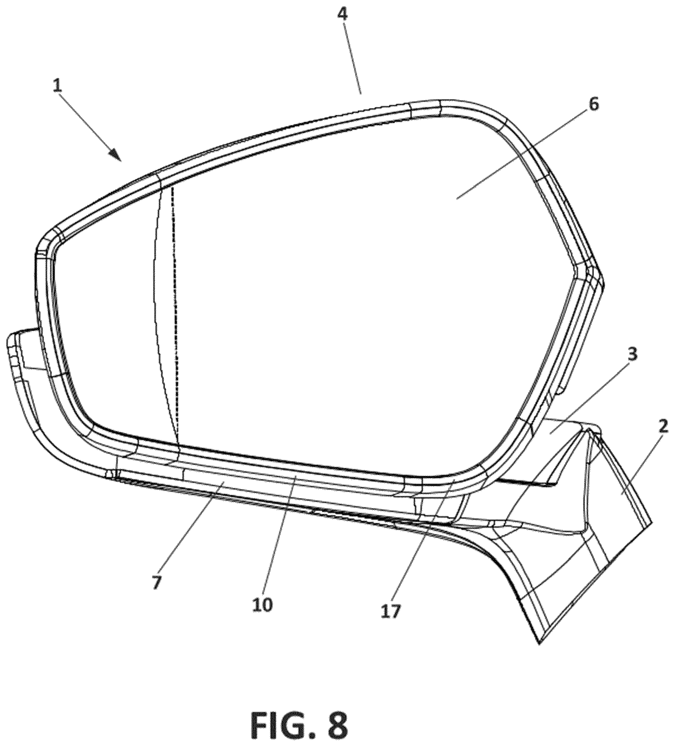

Figure 8.- shows a rear elevational view of the assembly of Figure 6.

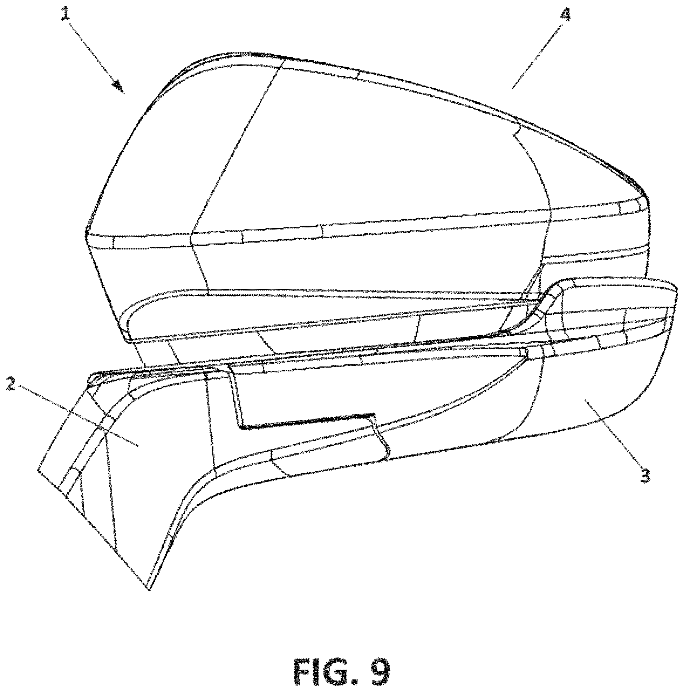

Figure 9.- shows a front elevational view of the assembly of Figure 6.

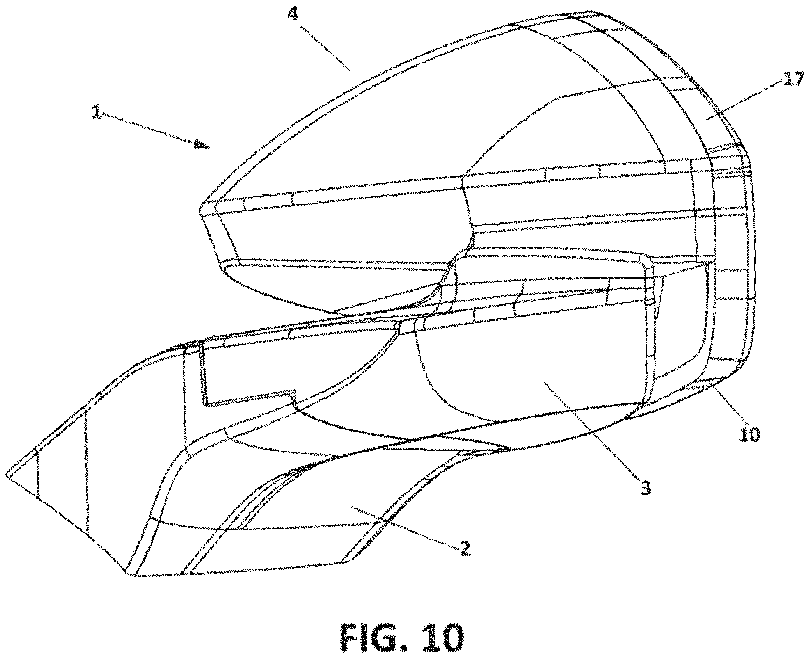

Figure 10.- shows another perspective view of the assembly of Figure 6.

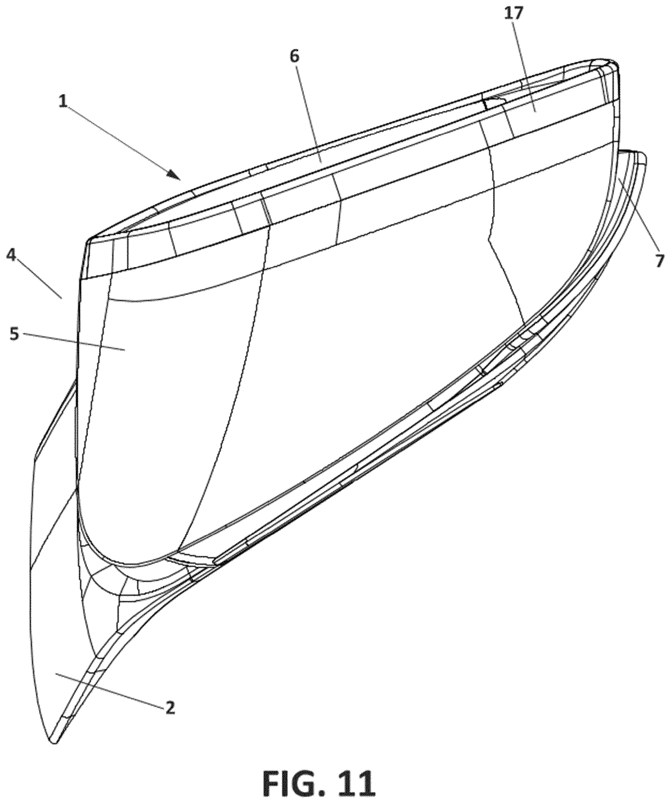

Figure 11.- shows a top plan view of the assembly of Figure 6.

### Preferred embodiment of the invention

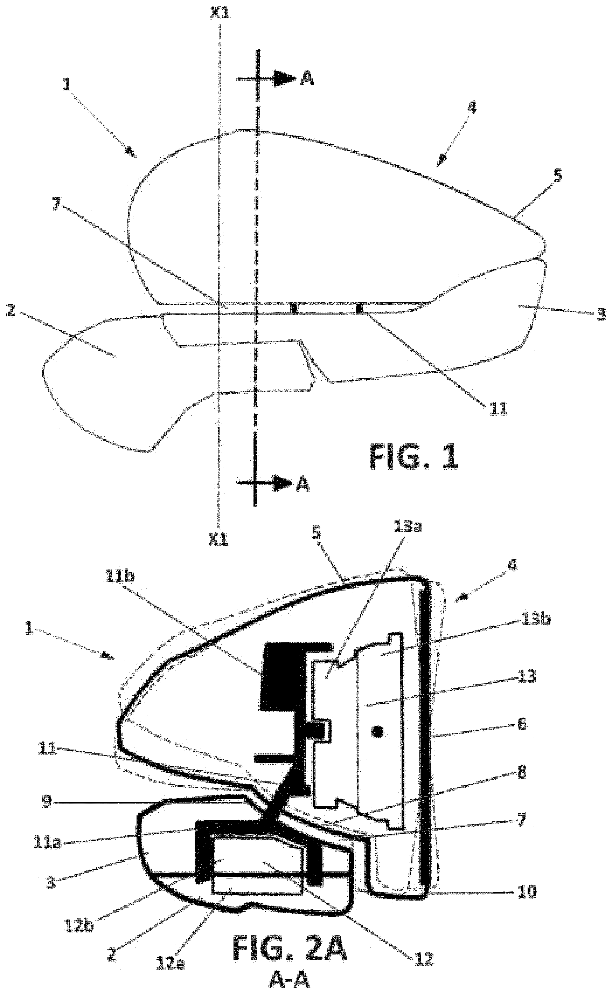

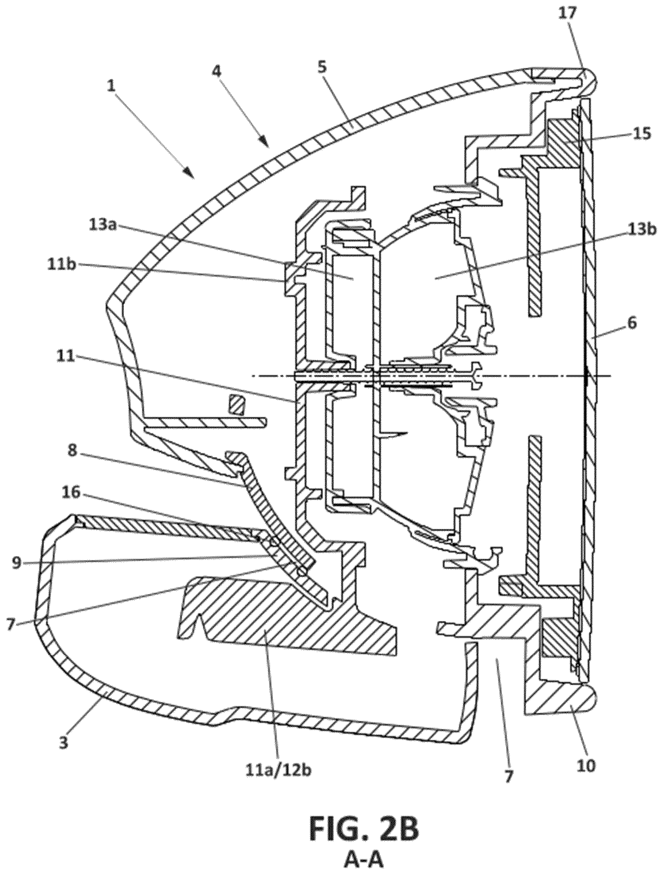

**Figures 1** and **2** show an exemplary implementation of an exterior rearview mirror assembly (1) for vehicles according to the invention, wherein the assembly (1) comprises: a fixed part (2) configured to be attached to an exterior part of a vehicle (not shown), a movable part (3) mounted at the fixed part (2) and rotatable relative to the fixed part (2) about a first axis (X1).

The assembly (1) further comprises a mirror head (4) comprising a mirror housing (5) and a mirror pane (6) having a mirror reflective surface.

The mirror pane (6) has a first surface, a second surface and a perimetric edge, wherein the first surface is the surface closer to the driver when the assembly is operatively attached to the vehicle. The perimetric edge of the mirror pane (6) may be overlapped totally, as shown in Figures 2A, 2B, or partially by the mirror housing (5), or alternatively not overlapped by the mirror housing (5). Further, the mirror housing (5) could overlap, be flush, as shown in Figures 2A, 2B or not with the first surface of the mirror pane (6).

The mirror head (4) is mounted at the movable part (3), such that the mirror head (4) and the movable part (3) are jointly rotatable about the first axis (X1).

When the assembly (1) is operatively attached to a vehicle, the movable part (3) can rotate about the first axis (X1) between an extended position in which the mirror head (4) can be positioned to provide a rear field of view for a driver while driving a vehicle, and a parking position in which the mirror head (4) is folded towards the vehicle.

In addition, the mirror head (4) has at least one degree of freedom of movement, such as the mirror head (4) can tilt and/or rotate relative to the movable part (3) about a tilting point or second axis (X2) to adjust a rear field of view for a driver when the assembly is operatively attached to a vehicle. An actuator to impart the tilt movement, can be implemented for example as a ball-joint, that typically has several degrees of freedom of movement. The first and second axis (X1, X2) are substantially orthogonal to each other, or they are arranged relative to each other to define an angle within the range 70° to 110°, that is (90° +/- 20°).

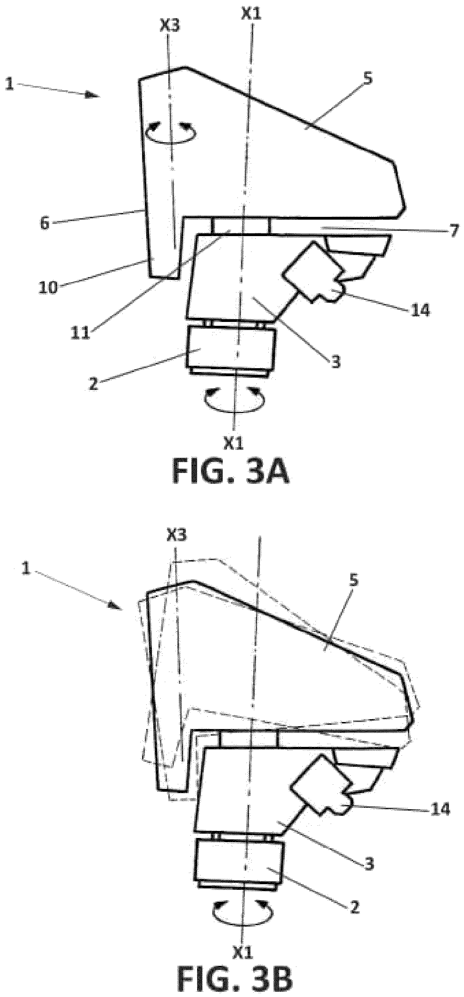

As represented in **Figures 3A, 3B** and **4****,** the mirror head (4) is further adapted to have a second degree of freedom of movement, for example the mirror head (4) is adapted to tilt or rotate relative to the movable part (3) about a third axis X3, such that the first and third axis (X1,X3) are parallel to each other, or they are arranged relative to each other to define an angle within the range 340° to 20 °, that is (0° +/- 20°).

The assembly (1) is configured such that a gap (7) is formed in between the movable part (3) and the mirror head (4) to allow the tilting or rotation movement of the mirror head (4) relative to the movable part (3).

As shown in **Figure 2****,** the mirror head (4) has a curved surface (8), and the movable part (3) has also a curved surface (9), such that both curved surfaces (8,9) are opposite each other, and the gap (7) is formed between both curved surfaces (8,9), in order to allow rotational or tilting movement of the mirror head (4) with respect to the movable part (3).

The assembly (1) might include diffusers or guides to direct the air flow through the gap, in order to optimize the coefficient of friction therein.

Alternatively, to the provision of curved surfaces (8,9) and the gap (7), in other preferred embodiment of the invention (not shown), the mirror head (4) has a cavity accessible from outside the mirror head (4), and the movable part (3) is enclosed or partially enclosed in that cavity of the mirror head (4) in a way that relative movement between the movable part and the mirror head is allowed.

Furthermore, the mirror head (4) has a lower extension (10) at the part of the same where the mirror pane (6) is fitted. The lower extension (10) is a prolongation of the mirror housing (5) towards the ground (when the assembly is operatively attached to a vehicle), and part of the movable part (3) is behind the extension (10) from the point of view of a driver when the assembly (1) is attached to a vehicle, and the mirror housing (5) is also above the movable part and closer to the driver than the movable part (3).

In the embodiment shown in **Figure 2A****,** 100% of the front surface (from the point of view of the driver while driving the vehicle forward normally) of the movable part (3) is overlapped or covered by the mirror head (4). In alternative embodiments, at least 50%, or at least 75% of the front surface of the movable part (3) is overlapped or covered by the mirror head (4).

Due to the lower extension (10) of the mirror head (4), the assembly (1) can have a reduced size, in contrast with prior art rear view mirrors that typically are quite bulky because the mirror head and fixed part are assembled one on top of each other with the whole upper surface of the movable part covered by the mirror head.

It could be described that, in the present invention in contrast with the prior art, the mirror head (4) and the movable part (3) are brought together in order to reduce the volume of the whole assembly (1) but maintaining the required surface of the mirror pane (6).

Furthermore, in the embodiment of **Figure 2A** 100 % of the upper surface of the movable part (3), is overlapped by the mirror head (4). In the alternative embodiment of **Figure 2B****,** between 75% and 100% of the upper surface of the movable part (3), is overlapped by the mirror head (4).

The mirror pane (6) also extends on this extension (10), as shown for example in **Figure 2****.** The movable part (3) is placed behind the lower extension (10) from the point of view of a driver while driving the vehicle, and when the assembly is operatively attached to a vehicle. The gap (7) also extends in between the extension (10) and the movable part (3).

The assembly (1) includes a first actuator (12) encased at least partially inside the movable part (3) and adapted to impart a rotation movement to the movable part (3), and a second actuator (13) enclosed within the mirror head (4) and adapted to impart a rotation or titling movement to the mirror pane (6) or to the mirror pane (6) and mirror head (4) when they are coupled together. In any case, the mirror housing (5) and the mirror pane (6) always move in tandem with respect to the first actuator (12).

The first and second actuators (12,13) are independently operable, and typically consist of electric motors.

Each of the first and second actuators (12,13), has a fixed component (12a, 13a) respectively and a movable component (12b,13b) respectively movable in relation to the fixed component (12a,13a). The fixed component (12a) of the fist actuator (12) is fixed to the fixed part (2), and its movable component (12b) is fixed to the movable part (3) and to the first part (11a) of the bracket (11). In turn, a second part (11b) of the bracket (11) is joined to the fixed part (13a) of the second actuator (13) placed inside the mirror head (4), and the movable part (13b) of the second actuator (13) is coupled with the mirror pane (6).

The assembly (1) includes a bracket (11) having a first part (11a) enclosed inside the movable part (3) and coupled or integrally formed with the movable component (12b) of the first actuator (12), and a second part (11b) enclosed inside the mirror head (4) and coupled or integrally formed with the fixed component (13a) of the second actuator (13), such that the mirror head (4) is mounted or it is supported at the movable part (3) by means of the bracket (11). The bracket (11) may run across the gap (7), as shown in **Figure 2****.**

The mirror head (4) and the movable part (3) have respective openings for the passage of the bracket (11), and rubber gaskets (16) are fitted in those openings such that no external elements, such that water or dust, can enter into the mirror head (5) and the movable part (3).

The mirror pane (6) and the movable component (13b) of the second actuator (13) are directly attached with each other. Alternatively, the mirror pane (6) and the movable component (13b) are coupled by means of a first intermediate coupling member, such as a back plate (15) as shown in **Figure 2B****.**

Preferably, the mirror housing (5) and the mirror pane (6) are connected to each other, with no relative movement between them, moving in tandem, by an action imparted by the first or the second actuator (12,13). For example, they may be directly attached to each other. Alternatively, the mirror housing (5) and the mirror pane (6) may be coupled by means of a second intermediate coupling member (17). In this case, the attachment to the movable component (13b) of the second actuator (13), can be realized by means of: the mirror housing (5), the second intermediate coupling member (17), or by means of the mirror pane (6). As an example, in **Figure 2B****,** the connection to the movable component (13b) of the second actuator (13) is made through the second intermediate coupling member (17).

In the alternative embodiment in which the mirror housing (5) and the mirror pane (6) do not move in tandem, then, the mirror housing (5) is coupled to: the bracket (11), or to the fixed component (13a) of the second actuator (13), and the mirror pane (6) is coupled with the movable component (13b) of the second actuator (13).

The movable part (3) is fitted with at least one electric and/electronic component, for example at least one camera (14) as is the case of the implementation shown in **Figures 3A, 3B****,** two cameras and or a lighting device. Alternatively, an electric and/electronic component is also provided in the mirror head (4) or on the same bracket (11).

By placing the camera (14) or the electric/electronic component in the movable part (3) or in the bracket (11), the safety of the assembly is improved because the camera (14) or the electric/electronic component move together with the mirror head (4) to the parking position in which they are less exposed to damage, but at the same time it is achieved that the proper working position of the camera (14) or the electric/electronic component is not altered in the drive position when the position of the mirror pane (6) needs to be adjusted in the case that the mirror pane (6) moves in tandem with the mirror housing (5), due to the camera (14) or the electric/electronic component only moves according to the action of the first actuator (12) and not according to the action of the second actuator (13) which adjusts mirror pane (6) position.

The bracket (11) can be provided with an internal channel for the passage of wires from the movable part (3) to the mirror head (4) for the electric connection of the second actuator (13) and other electric devices placed in the mirror head (4) that require power and control signals to operate. This internal passage may be isolated from the environment to avoid the entrance of water or dust to the interior of the mirror head or to the interior the movable part, that is especially advantageous in the embodiment in which the assembly is provided with a gap in between the mirror head and the movable part, because in that case, the portion of the bracket in the gap, is not protected by the movable part or the mirror housing.

The bracket (11) may be provided with fixing means for fixing a wiring along the same, especially in the embodiment in which the movable part (3) is inside the mirror head (4).

Since the bracket (11) is an element that does not move when the mirror head (4) could move through the action of the second actuator (13), or move together with the mirror head (4) and movable part (3) through the action of the first actuator (12), the fixation of the wiring to the bracket (11) or the passing of the wiring through the bracket (11) itself, helps to prevent the wiring from twisting or getting caught in any element of the mirror head (4) or movable part (3).

The bracket (11) can be made of a metallic material, such as: aluminium, an aluminium alloy or any other suitable light metal or light metal alloy, when a heavy mirror head has to be supported or when the mirror head has to withstand strong aerodynamic forces, as is the case of high speed vehicles. In other cases, the bracket (11) can be made of a suitable plastic material.

Other preferred embodiments of the present invention are described in the appended dependent claims and the multiple combinations of those claims.

## Claims

1. An exterior rearview mirror assembly (1) for vehicles, the assembly (1) comprising:
a fixed part (2) configured to be attached to an exterior part of a vehicle,
a movable part (3) mounted at the fixed part (2), and rotatable relative to the fixed part (2) about a first axis (X1),
a mirror head (4) comprising a mirror housing (5) and a mirror pane (6),
wherein the mirror head (4) is mounted at the movable part (3), such that the mirror head (4) and the movable part (3) are jointly rotatable about the first axis (X1), and
wherein the mirror head (4) can tilt or rotate relative to the movable part (3) about a second axis (X2),
wherein the first and second axis (X1, X2) are orthogonal to each other, or they are arranged relative to each other to define an angle within the range 70° to 110°.

2. The assembly according to claim 1, wherein at least one electric and/electronic component is fitted to the movable part (3).

3. The assembly according to claim 2, wherein the electric and/electronic component is at least one of the following list: a camera (14), a lighting device, an antenna, and a wireless communication system.

4. The assembly according to any of the preceding claims, wherein the adjustment of the mirror head (4) is independent of the movable part (3).

5. The assembly according to any of the preceding claims, further comprising a first actuator (12) encased at least partially inside the movable part (3) and adapted to impart a rotation movement to the movable part (3), the first actuator (12) preferably being placed outside the mirror head (4).

6. The assembly according to claim 5, further comprising a second actuator (13) enclosed within the mirror head (4) and adapted to impart a titling movement about a tilting point to the mirror head (4), or a rotational movement to the mirror head (4) about at least the second axis X2.

7. The assembly according to claim 6, wherein the first and second actuators (12,13) are independently operable.

8. The assembly according to claims 6-7, wherein the first and second actuators (12,13) consist of electric motors.

9. The assembly according to claims 6-8, wherein the second actuator (13) imparts a tilting or rotational movement to the mirror head (4) about a third axis (X3).

10. The assembly according to claims 6-9, wherein the mirror housing (5) and the mirror pane (6) are connected to each other, with no relative movement between them, moving in tandem, by an action imparted by the first or the second actuator (12,13).

11. The assembly according to any of the preceding claims, wherein the mirror housing (5) and the mirror pane (6) are coupled by means of a second intermediate coupling member (17).

12. The assembly according to any of the preceding claims, wherein at least 50%, preferably at least 75%, or more preferably 100%, of an upper surface of the movable part (3) is overlapped by the mirror head (4), wherein the mirror head (4) has a lower extension (10), and wherein a part of the movable part (3) is placed behind the lower extension (10), when the assembly (1) is operatively attached to a vehicle, and from the point of view of a driver while driving the vehicle.

13. The assembly according to any of the preceding claims, wherein the upper surface or a front surface of the movable part (3) is not overlapped wholly by the mirror head (4) from one end to the other end in a transversal direction (Y) to the longitudinal direction of the vehicle.

14. The assembly according to any of the preceding claims, configured such that a gap (7) is formed in between the movable part (3) and the mirror head (4) to allow the tilting or rotation movement of the mirror head (4), and wherein the gap (7) is formed between a curved surface (9) of the movable part (3) and a curved surface (8) of the mirror housing (5).

15. The assembly according to claim 14, further comprising diffusers or guides to direct the air flow through the gap (7).
